# EUROPEAN PATENT APPLICATION

(11) **EP 4 826 481 A1**
(43) Date of publication of application: **21.10.2026**
(21) Application number: 24902615.4
(22) Date of filing: 02.12.2024
(51) Int. Cl.: G05D 1/43

(54) **POOL CLEANING ROBOT CONTROL METHOD, AND APPARATUS**

(30) Priority: 13.12.2023 CN 202311714081
(71) Applicant: Wybotics Co., Ltd, Tianjin 300462 (CN)
(72) Inventor: WANG, Mengqi, Tianjin 300462 (CN); LI, Cheng, Tianjin 300462 (CN)
(74) Representative: Winter, Brandl - Partnerschaft mbB
(86) International application number: PCT/CN2024/136073
(87) International publication number: WO 2025/124194

(57) **Abstract**

The present disclosure discloses a control method and apparatus for a pool cleaning robot. The method includes: starting a first water pump of the pool cleaning robot such that the pool cleaning robot moves in a first direction at a bottom of a pool, the first water pump being configured to pump a liquid from a sewage suction port of the pool cleaning robot to a first water outlet of the pool cleaning robot, the first water outlet being oriented in a second direction, the first direction and the second direction being opposite to each other; starting a second water pump of the pool cleaning robot when the pool cleaning robot has moved to a pool wall of the pool, to increase a liquid flow rate of the sewage suction port, the second water pump being configured to pump the liquid from the sewage suction port to a second water outlet of the pool cleaning robot, and the second water outlet being oriented in the first direction; and adjusting power of the first water pump and the second water pump, such that the pool cleaning robot maintains contact with the pool wall.

## Description

### CROSS REFERENCE TO RELATED APPLICATION

The present disclosure claims priority to Chinese Patent Application No. 2023117140817, entitled "CONTROL METHOD AND APPARATUS FOR POOL CLEANING ROBOT" and filed on December 13, 2023, the entire contents of which are incorporated herein by reference.

### TECHNICAL FIELD

The present disclosure relates to the field of robot technology, and more particularly, to a control method and apparatus for a pool cleaning robot.

### BACKGROUND

With the development of computer technologies, robot technologies have also developed rapidly, and more and more types of robots are available on the market. For example, users use vacuum cleaning robots to clean floors of houses, use window cleaning robots to clean windows of the houses, and use pool cleaning robots to clean pools.

### SUMMARY

Embodiments of the present disclosure provide a control method and apparatus for a pool cleaning robot, the pool cleaning robot, and a computer-readable storage medium, which can improve cleaning effects of the pool cleaning robot. The technical solutions are described as follows.

In one aspect, there is provided a control method for a pool cleaning robot, which includes:
starting a first water pump of the pool cleaning robot such that the pool cleaning robot moves in a first direction at a bottom of a pool, the first water pump being configured to pump a liquid from a sewage suction port of the pool cleaning robot to a first water outlet of the pool cleaning robot, the first water outlet being oriented in a second direction, the first direction and the second direction being opposite to each other, and the sewage suction port being positioned at a bottom of the pool cleaning robot;
starting a second water pump of the pool cleaning robot when the pool cleaning robot has moved to a pool wall of the pool, to increase a liquid flow rate of the sewage suction port, the second water pump being configured to pump the liquid from the sewage suction port to a second water outlet of the pool cleaning robot, and the second water outlet being oriented in the first direction; and

Adjusting power of the first water pump and the second water pump, such that the pool cleaning robot maintains contact with the pool wall.

In another aspect, there is provided a control apparatus for a pool cleaning robot, which includes:
a first starting module configured to start a first water pump of the pool cleaning robot such that the pool cleaning robot moves in a first direction at a bottom of a pool, the first water pump being configured to pump a liquid from a sewage suction port of the pool cleaning robot to a first water outlet of the pool cleaning robot, the first water outlet being oriented in a second direction, the first direction and the second direction being opposite to each other, and the sewage suction port being positioned at a bottom of the pool cleaning robot;
a second starting module configured to start a second water pump of the pool cleaning robot when the pool cleaning robot has moved to a pool wall of the pool, to increase a liquid flow rate of the sewage suction port, the second water pump being configured to pump the liquid from the sewage suction port to a second water outlet of the pool cleaning robot, and the second water outlet being oriented in the first direction; and
a power adjustment module configured to adjust power of the first water pump and the second water pump such that the pool cleaning robot maintains contact with the pool wall.

In yet another aspect, there is provided a pool cleaning robot, which includes one or more processors and one or more memories, wherein the one or more memories store at least one computer program loaded and executed by the one or more processors to implement the control method for the pool cleaning robot.

In still another aspect, there is provided a computer-readable storage medium, which stores at least one computer program loaded by a processor to perform the control method for the pool cleaning robot.

In still another aspect, there is provided a computer program product or computer program, which includes program code stored in the computer-readable storage medium. The processor of the pool cleaning robot reads the program code from the computer-readable storage medium, executes the program code, and causes the pool cleaning robot to perform the control method for the pool cleaning robot.

### BRIEF DESCRIPTION OF THE DRAWINGS

To describe the technical solutions in the embodiments of the present disclosure more clearly, the accompanying drawings required for describing the embodiments will be briefly introduced below. Apparently, the accompanying drawings in the following description are merely some embodiments of the present disclosure. To those of ordinary skills in the art, other accompanying drawings may also be derived from these accompanying drawings without creative efforts.
FIG. 1 is a schematic diagram of a pool cleaning robot according to an embodiment of the present disclosure;
FIG. 2 is a schematic diagram of a pool cleaning robot moving in a pool according to an embodiment of the present disclosure;
FIG. 3 is a flowchart of a control method for a pool cleaning robot according to an embodiment of the present disclosure;
FIG. 4 is a flowchart of a control method for another pool cleaning robot according to an embodiment of the present disclosure;
FIG. 5 is a schematic diagram of another pool cleaning robot moving in a pool according to an embodiment of the present disclosure;
FIG. 6 is a schematic diagram of still another pool cleaning robot moving in a pool according to an embodiment of the present disclosure;
FIG. 7 is a flowchart of a control method for still another pool cleaning robot according to an embodiment of the present disclosure;
FIG. 8 is a flowchart of a control method for still another pool cleaning robot according to an embodiment of the present disclosure;
FIG. 9 is a schematic structural diagram of a control apparatus for a pool cleaning robot according to an embodiment of the present disclosure; and
FIG. 10 is a schematic structural diagram of a pool cleaning robot according to an embodiment of the present disclosure.

### DETAILED DESCRIPTION

To make the objectives, technical solutions and advantages of the present disclosure clearer, the embodiments of the present disclosure will be further described in detail below with reference to the accompanying drawings.

Terms such as "first" and "second" in the present disclosure are used to distinguish between the same or similar items whose roles and functions are basically the same. It should be understood that there is no logical or temporal dependency between "first", "second", and "nth", nor is there a limitation on quantity and execution order.

First, a brief introduction is made to terms involved in the embodiments of the present disclosure.

Pool cleaning robot: a robot used for performing underwater cleaning tasks. For example, the pool cleaning robot is placed in a pool, such that the pool cleaning robot can clean the bottom and walls of the pool.

Water pump: a mechanical device used for transporting or pressurizing a liquid. The water pump transfers mechanical energy of a prime motor or other external energy to the liquid to increases the energy of the liquid, and the water pump is mainly used for transporting the liquid. In the embodiments of the present disclosure, the water pump is used for driving the pool cleaning robot to move and for sewage suction.

Radar: transliteration of the English word Radar (Radio Detection and Ranging), which refers to detecting targets and measuring their spatial positions by means of radio. Therefore, the radar is also known as "radio positioning". The radar is an electronic device used for detecting targets by means of electromagnetic waves. The radar emits electromagnetic waves to illuminate the targets and receives their echoes, thereby obtaining information such as distances from the targets to emission points of the electromagnetic waves, distance change rate (radial velocity), azimuth, and altitude.

Ultrasonic wave: a mechanical wave with an extremely short wavelength, which is typically shorter than 2 cm (centimeters) in air. The ultrasonic wave relies on a medium for propagation and cannot exist in vacuum (such as outer space). The ultrasonic wave travels farther in water than in air, and in some scenarios, a propagation distance of the ultrasonic wave in water can reach several hundred meters.

In related technologies, when the pool cleaning robot cleans the pool, it is unable to effectively clean the bottom of the pool below the pool wall, resulting in poor cleaning effects of the pool cleaning robot.

After the terms involved in the embodiments of the present disclosure are introduced, application scenarios of the embodiments of the present disclosure will be explained below.

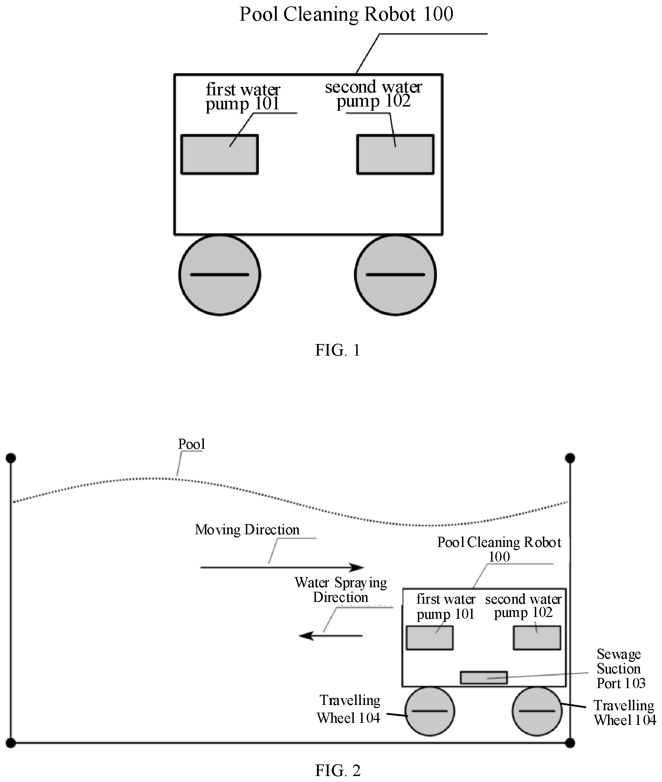

The technical solutions provided in the embodiments of the present disclosure can be applied in the scenario of controlling a pool cleaning robot provided with at least two water pumps. Taking the pool cleaning robot with two water pumps as an example, as shown in FIG. 1, the pool cleaning robot 100 includes a first water pump 101 and a second water pump 102. The first water pump 101 is configured to pump a liquid towards the left side of the pool cleaning robot 100 and spray it out from the left side of the pool cleaning robot 100. The second water pump 102 is configured to pump the liquid towards the right side of the pool cleaning robot 100 and spray it out from the right side of the pool cleaning robot 100. Referring to FIG. 2, the pool cleaning robot 100 also includes a sewage suction port 103, which is oriented below the pool cleaning robot. Sewage below the pool cleaning robot 100 can be sucked into a filtering unit of the pool cleaning robot 100 through the sewage suction port 103, thereby achieving cleaning of the pool. When the first water pump 101 is started, the liquid may be pumped from the sewage suction port 103 to the left side of the pool cleaning robot 100, such that the pool cleaning robot 100 can suck the liquid from the sewage suction port 103. Besides, the liquid sprayed from the left side of the pool cleaning robot 100 can also push the pool cleaning robot 100 to move to the right. In this way, movement and sewage suction go on simultaneously. When the second water pump 102 is started, the liquid may be pumped from the sewage suction port 103 to the right side of the pool cleaning robot 100, such that the pool cleaning robot 100 can suck the liquid from the sewage suction port 103. Besides, the liquid sprayed from the right side of the pool cleaning robot 100 can also push the pool cleaning robot 100 to move to the left. In this way, movement and sewage suction go on simultaneously. The pool cleaning robot 100 also includes travelling wheels 104, and the number of the travelling wheels 104 may be two, four, or more, but the embodiments of the present disclosure are not limited thereto.

Without using the control method for the pool cleaning robot provided in the embodiments of the present disclosure, when the pool cleaning robot has moved to the pool wall of the pool and comes into contact with the pool wall, the pool cleaning robot may be bounced away from the pool wall, making it impossible to effectively clean a connection between the pool wall and the pool bottom. By adopting the control method for the pool cleaning robot provided in the embodiments of the present disclosure, the two water pumps can be simultaneously started to increase sewage suction force of the sewage suction port 102 when the pool cleaning robot 100 has moved to the pool wall. In addition, starting the two water pumps can also keep the pool cleaning robot 100 staying on the pool wall, thereby improving the cleaning effects on the connection between the pool bottom and the pool wall, and thus improving the overall cleaning effects of the pool cleaning robot on the pool.

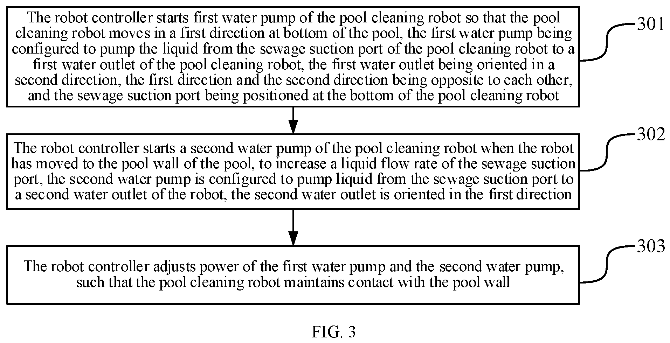

After the application scenario of the present disclosure has been introduced, the control method for the pool cleaning robot provided in the present disclosure will be introduced below. Referring to FIG. 3, taking an example where an execution subject is a robot controller, the method includes the following steps.

In Step 301, the robot controller starts a first water pump of the pool cleaning robot such that the pool cleaning robot moves in a first direction at the bottom of the pool. The first water pump is configured to pump the liquid from the sewage suction port of the pool cleaning robot to a first water outlet of the pool cleaning robot, where the first water outlet is oriented in a second direction, the first direction and the second direction are opposite to each other, and the sewage suction port is positioned at the bottom of the pool cleaning robot.

The robot controller is built into the pool cleaning robot to control the pool cleaning robot. The pool cleaning robot is used to clean the bottom and the walls of the pool. When the pool cleaning robot is positioned at the bottom of the pool, the pool cleaning robot can move on the bottom of the pool and perform cleaning tasks. The first water pump is built into the pool cleaning robot, and the first water pump is communicated with the sewage suction port and the first water outlet. That is, the first water pump pumps the liquid from the sewage suction port to the first water outlet, and the liquid is sprayed out from the first water outlet. In some embodiments, a filtering unit is provided between the sewage suction port and the first water pump, and the liquid sucked from the sewage suction port may pass through the filtering unit. The sewage in the liquid may remain in the filtering unit and does not reach the first water outlet together with the liquid, thereby achieving cleaning of the pool. The first water outlet is oriented in the second direction. That is, the liquid sprayed from the first water outlet may be sprayed in the second direction, thereby generating a reaction force in the first direction to drive the pool cleaning robot to move in the first direction. The sewage suction port is positioned at the bottom of the pool cleaning robot, which means that the pool cleaning robot may suck the liquid below to clean a position where the pool cleaning robot passes through.

In Step 302, the robot controller starts a second water pump of the pool cleaning robot when the pool cleaning robot has moved to the pool wall of the pool, to increase a liquid flow rate of the sewage suction port. The second water pump is configured to pump the liquid from the sewage suction port to a second water outlet of the pool cleaning robot, where the second water outlet is oriented in the first direction.

The pool cleaning robot has moved to the pool wall of the pool, which means that the pool cleaning robot comes into contact with the pool wall, or a distance between the pool cleaning robot and the pool wall is less than or equal to a preset distance. The pool wall is positioned in the first direction of the pool cleaning robot. The second water pump is built into the pool cleaning robot, and the second water pump is communicated with the sewage suction port and the second water outlet. That is, the second water pump pumps the liquid from the sewage suction port to the second water outlet, and the liquid is sprayed out from the second water outlet. In some embodiments, a filtering unit is provided between the sewage suction port and the second water pump, and the liquid sucked from the sewage suction port may pass through the filtering unit. The sewage in the liquid may remain in the filtering unit and does not reach the second water outlet together with the liquid, thereby achieving cleaning of the pool. The second water outlet is oriented in the first direction, which means that the liquid sprayed from the second water outlet may be sprayed in the first direction, thereby generating a reaction force in the second direction to drive the pool cleaning robot to move in the second direction. Compared to only starting the first water pump, starting both the first water pump and the second water pump simultaneously can increase the liquid flow rate of the sewage suction port, thereby enhancing the cleaning capacity of the pool cleaning robot.

In Step 303, the robot controller adjusts power of the first water pump and the second water pump, such that the pool cleaning robot maintains contact with the pool wall.

When both the first water pump and the second water pump are started, the first water pump may drive the pool cleaning robot to move in the first direction, and the second water pump may drive the pool cleaning robot to move in the second direction. To keep the pool cleaning robot in contact with the pool wall, it is required to adjust the power of the first water pump and the second water pump, such that the pool cleaning robot maintains the trend of moving in the first direction.

Through the technical solutions provided in the embodiments of the present disclosure, the first water pump of the pool cleaning robot is started to pump the liquid from the sewage suction port of the pool cleaning robot to the first water outlet oriented in the second direction, such that the pool cleaning robot moves in the first direction opposite to the second direction at the bottom of the pool. When the pool cleaning robot has moved to the pool wall of the pool, the second water pump of the pool cleaning robot is started to increase the liquid flow rate of the sewage suction port, that is, to improve the cleaning capacity of the pool cleaning robot. The power of the first water pump and the power of the second water pump are adjusted to keep the pool cleaning robot in contact with the pool wall, thereby achieving effective cleaning of the connection between the pool wall and the pool bottom, and improving the cleaning capacity of the pool cleaning robot.

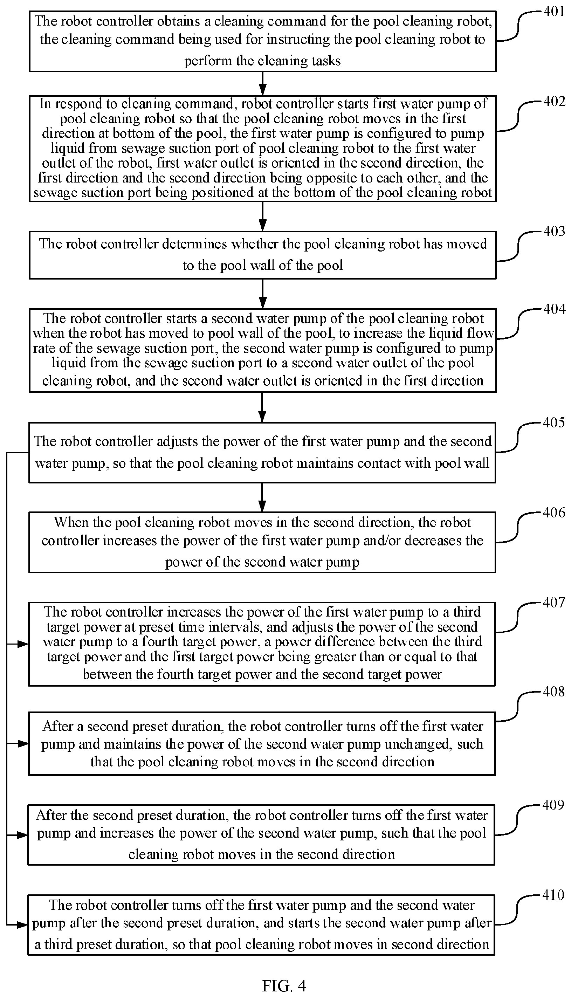

The above Steps 301 to 303 serve as a brief introduction to the control method for the pool cleaning robot provided in the embodiments of the present disclosure. The technical solutions provided in the embodiments of the present disclosure will be explained more clearly below in combination with some examples. As shown in FIG. 4, taking an example where the execution subject is the robot controller, the method includes the following steps.

In Step 401, the robot controller obtains a cleaning command for the pool cleaning robot, where the cleaning command is used for instructing the pool cleaning robot to perform the cleaning tasks.

The robot controller is built into the pool cleaning robot to control the pool cleaning robot. The pool cleaning robot is used to clean the bottom and the walls of the pool. When the pool cleaning robot is positioned at the bottom of the pool, the pool cleaning robot can move at the bottom of the pool and perform the cleaning tasks. In the embodiments of the present disclosure, performing the cleaning tasks refers to starting the water pump of the pool cleaning robot to pump the liquid from the pool using the water pump and filter the liquid, thereby achieving cleaning of the pool. The cleaning tasks include temporary cleaning tasks and scheduled cleaning tasks, where the temporary cleaning tasks are temporarily triggered cleaning tasks, and the scheduled cleaning tasks are periodic cleaning tasks.

In Step 402, in response to the cleaning command, the robot controller starts the first water pump of the pool cleaning robot such that the pool cleaning robot moves in the first direction at the bottom of the pool. The first water pump is configured to pump the liquid from the sewage suction port of the pool cleaning robot to the first water outlet of the pool cleaning robot, where the first water outlet is oriented in the second direction, the first direction and the second direction are opposite to each other, and the sewage suction port is positioned at the bottom of the pool cleaning robot.

The first water pump is built into the pool cleaning robot, and the first water pump is communicated with the sewage suction port and the first water outlet. That is, the first water pump pumps the liquid from the sewage suction port to the first water outlet, and the liquid is sprayed out from the first water outlet. In some embodiments, a filtering unit is provided between the sewage suction port and the first water pump, and the liquid sucked from the sewage suction port may pass through the filtering unit. The sewage in the liquid may remain in the filtering unit and does not reach the first water outlet together with the liquid, thereby achieving cleaning of the pool. The first water outlet is oriented in the second direction. That is, the liquid sprayed from the first water outlet may be sprayed in the second direction, thereby generating a reaction force in the first direction to drive the pool cleaning robot to move in the first direction. The sewage suction port is positioned at the bottom of the pool cleaning robot, which means that the pool cleaning robot may suck the liquid below to clean a position where the pool cleaning robot passes through. The number of the first water pumps is one or more, but the embodiments of the present disclosure are not limited thereto. For ease of explanation, reference will be made below by taking an example where the number of the first water pump is one.

In one possible implementation, in response to the cleaning command, the robot controller obtains a cleaning level from the cleaning command, where the cleaning level is used for indicating cleaning power of the pool cleaning robot. The robot controller determines first power corresponding to the cleaning level. The robot controller sends a start command carrying the first power to the first water pump, where the start command is used for instructing the first water pump to start and operate at the first power. When the first water pump is started, the liquid below the pool cleaning robot is pumped to the first water outlet of the pool cleaning robot, and the liquid is sprayed out from the first water outlet, thereby driving the pool cleaning robot to move in the first direction.

A correspondence relationship between the cleaning level and the first power is set by technical personnel according to actual situations, and no limitations are imposed in the embodiments of the present disclosure. The higher the power of the first water pump is, the faster the liquid is pumped from below the pool cleaning robot, and the stronger the cleaning capacity is. Correspondingly, the higher the flow velocity of the liquid is sprayed from the first water outlet, the faster the pool cleaning robot moves.

In this implementation, in response to the cleaning command, the cleaning level is obtained from the cleaning command, and the first power corresponding to the cleaning level is determined. The first water pump is controlled to start and operate at the first power, thereby driving the pool cleaning robot to move and clean the pool bottom.

In one possible implementation, in response to the cleaning command, the robot controller determines the remaining battery capacity of the pool cleaning robot. When the remaining battery capacity is greater than or equal to a battery capacity threshold, the robot controller sends a start command to the first water pump, where the start command is used for instructing the first water pump to start. When the first water pump is started, the liquid below the pool cleaning robot is pumped to the first water outlet of the pool cleaning robot, and the liquid is sprayed out from the first water outlet, thereby driving the pool cleaning robot to move in the first direction.

The battery capacity threshold is set by the technical personnel according to the actual situations, and no limitations are imposed in the embodiments of the present disclosure.

In this implementation, before the first water pump is started, the remaining battery capacity of the pool cleaning robot is first determined. The first water pump is started when the remaining battery capacity is greater than or equal to the battery capacity threshold, to ensure normal operation of the pool cleaning robot.

In Step 403, the robot controller determines whether the pool cleaning robot has moved to the pool wall of the pool.

The pool cleaning robot has moved to the pool wall of the pool, which means that the pool cleaning robot comes into contact with the pool wall, or the distance between the pool cleaning robot and the pool wall is less than or equal to the preset distance. The pool wall is positioned in the first direction of the pool cleaning robot.

In one possible implementation, when the pool cleaning robot includes a collision detection unit, the robot controller determines whether the pool cleaning robot has moved to the pool wall of the pool by means of the collision detection unit.

The collision detection unit is configured to detect a collision between the pool cleaning robot and the pool wall. A plurality of the collision detection units are provided, and the plurality of collision detection units are installed around the pool cleaning robot.

In this implementation, it can be more efficiently determined whether the pool cleaning robot has moved to the pool wall of the pool by means of the collision detection unit.

For example, when the pool cleaning robot includes the collision detection unit, the robot controller determines a collision parameter acquired by the collision detection unit. When the collision parameter meets a preset collision condition, the robot controller determines that the pool cleaning robot has moved to the pool wall of the pool. When the collision parameter does not meet the preset collision condition, the robot controller determines that the pool cleaning robot has not yet moved to the pool wall of the pool.

When the collision parameter meets the preset collision condition, this means that the pool cleaning robot has collided with the pool wall of the pool. In some embodiments, when the collision parameter meets the preset collision condition, this means that the collision parameter is greater than or equal to a collision parameter threshold. In this case, the collision parameter can reflect a degree of collision, and the collision parameter is positively correlated with the degree of collision. The collision parameter threshold is set by the technical personnel according to the actual situations, and no limitations are imposed in the embodiments of the present disclosure.

For example, the pool cleaning robot includes the plurality of collision detection units, and the robot controller determines collision parameters acquired by the plurality of collision detection units. When the collision parameter acquired by a target collision detection unit among the plurality of collision detection units meets the preset collision condition, the robot controller determines that the pool cleaning robot has moved to the pool wall of the pool. The target collision detection unit is the collision detection unit corresponding to a forward direction (the first direction) of the pool cleaning robot. For example, when the forward direction of the pool cleaning robot is forward, the target collision detection unit is the collision detection unit installed in front of the pool cleaning robot. When the collision parameter acquired by the target collision detection unit does not meet the preset collision condition, the robot controller determines that the pool cleaning robot has not yet moved to the pool wall of the pool.

In one possible implementation, when the pool cleaning robot includes an acoustic transceiver unit, the robot controller controls the acoustic transceiver unit to emit an acoustic signal in the first direction. The robot controller determines whether the pool cleaning robot has moved to the pool wall of the pool based on a first echo signal received by the acoustic transceiver unit and the acoustic signal.

The acoustic transceiver unit is used for transmitting and receiving acoustic waves, and in some embodiments, the acoustic waves refer to ultrasonic waves.

In this implementation, it can be more efficiently determined whether the pool cleaning robot has moved to the pool wall of the pool by means of the acoustic transceiver unit.

For example, when the pool cleaning robot includes an acoustic transceiver unit, the robot controller controls the acoustic transceiver unit to emit an acoustic signal in the first direction. The robot controller determines a distance between the pool cleaning robot and the pool wall based on a time difference between the first echo signal received by the acoustic transceiver unit and the acoustic signal. The robot controller determines whether the pool cleaning robot has moved to the pool wall of the pool based on the distance between the pool cleaning robot and the pool wall.

For example, when the pool cleaning robot includes an acoustic transceiver unit, the robot controller controls the acoustic transceiver unit to emit an acoustic signal in the first direction. The robot controller determines the distance between the pool cleaning robot and the pool wall based on the time difference between the first echo signal received by the acoustic transceiver unit and the acoustic signal and the underwater propagation speed of the acoustic wave. When the distance is greater than or equal to the preset distance, the robot controller determines that the pool cleaning robot has not yet moved to the pool wall of the pool. When the distance is less than the preset distance, the robot controller determines that the pool cleaning robot has moved to the pool wall of the pool.

In one possible implementation, when the pool cleaning robot includes an image acquisition unit, the robot controller controls the image acquisition unit to acquire an image in the first direction. The robot controller determines whether the pool cleaning robot has moved to the pool wall of the pool based on the image.

In this implementation, it is determined whether the pool cleaning robot has moved to the pool wall based on the image acquired by the image acquisition unit, to achieve full utilization of the image acquisition unit.

For example, when the pool cleaning robot includes the image acquisition unit, the robot controller controls the image acquisition unit to acquire an image in the first direction. The robot controller recognizes the image and determines the distance between the pool cleaning robot and the pool wall. When the distance is greater than or equal to the preset distance, the robot controller determines that the pool cleaning robot has not yet moved to the pool wall of the pool. When the distance is less than the preset distance, the robot controller determines that the pool cleaning robot has moved to the pool wall of the pool.

In one possible implementation, when the pool cleaning robot includes a radar, the robot controller controls the radar to emit a detection signal in the first direction. The robot controller determines whether the pool cleaning robot has moved to the pool wall of the pool based on a second echo signal received by the radar and the detection signal.

The radar is either a laser radar or a millimeter wave radar, but the embodiments of the present disclosure are not limited thereto. Correspondingly, the detection signal is a laser detection signal or a millimeter wave detection signal, where the millimeter wave refers to an electromagnetic wave with a wavelength of 1 to 10 millimeters.

In this implementation, it can be more efficiently determined whether the pool cleaning robot has moved to the pool wall of the pool by means of the radar.

For example, when the pool cleaning robot includes the radar, the robot controller controls the radar to emit the detection signal in the first direction. The robot controller determines the distance between the pool cleaning robot and the pool wall based on a time difference between the second echo signal received by the radar and the detection signal. The robot controller determines whether the pool cleaning robot has moved to the pool wall of the pool based on the distance between the pool cleaning robot and the pool wall.

For example, when the pool cleaning robot includes the radar, the robot controller controls the radar to emit the detection signal in the first direction. The robot controller determines the distance between the pool cleaning robot and the pool wall based on the time difference between the second echo signal received by the radar and the detection signal and the underwater propagation speed of the acoustic wave. When the distance is greater than or equal to the preset distance, the robot controller determines that the pool cleaning robot has not yet moved to the pool wall of the pool. When the distance is less than the preset distance, the robot controller determines that the pool cleaning robot has moved to the pool wall of the pool.

It should be noted that the robot controller can determine whether the pool cleaning robot has moved to the pool wall of the pool through any one of the above methods, but the embodiments of the present disclosure are not limited thereto.

In Step 404, the robot controller starts a second water pump of the pool cleaning robot when the pool cleaning robot has moved to the pool wall of the pool, to increase the liquid flow rate of the sewage suction port. The second water pump is configured to pump the liquid from the sewage suction port to a second water outlet of the pool cleaning robot, where the second water outlet is oriented in the first direction.

The second water pump is built into the pool cleaning robot, and the second water pump is communicated with the sewage suction port and the second water outlet. That is, the second water pump pumps the liquid from the sewage suction port to the second water outlet, and the liquid is sprayed out from the second water outlet. In some embodiments, a filtering unit is provided between the sewage suction port and the second water pump, and the liquid sucked from the sewage suction port may pass through the filtering unit. The sewage in the liquid may remain in the filtering unit and does not reach the second water outlet together with the liquid, thereby achieving cleaning of the pool. The second water outlet is oriented in the first direction, which means that the liquid sprayed from the second water outlet may be sprayed in the first direction, thereby generating a reaction force in the second direction to drive the pool cleaning robot to move in the second direction. Compared to only starting the first water pump, starting both the first water pump and the second water pump simultaneously can increase the liquid flow rate of the sewage suction port, thereby enhancing the cleaning capacity of the pool cleaning robot. The number of the second water pumps is one or more, but the embodiments of the present disclosure are not limited thereto. For ease of explanation, reference will be made below by taking an example where the number of the second water pump is one. In the embodiments of the present disclosure, the first water pump is also referred to as a forward water pump, and the second water pump is also referred to as a backward water pump.

In one possible implementation, the robot controller turns off the first water pump when the pool cleaning robot has moved to the pool wall of the pool. The robot controller simultaneously starts the first water pump and the second water pump after a first preset duration.

The first preset duration is set by the technical personnel according to the actual situations, and no limitations are imposed in the embodiments of the present disclosure.

In this implementation, when the pool cleaning robot has moved to the pool wall of the pool, the robot controller turns off the first water pump and waits for the first preset duration, and then simultaneously starts the first water pump and the second water pump, thereby preventing sudden changes in force from causing sudden changes in a posture of the pool cleaning robot, such that the pool cleaning robot maintains a stable posture.

For example, when the pool cleaning robot has moved to the pool wall of the pool, the robot controller sends a shutdown command to the first water pump. The first water pump receives the shutdown command, and the first water pump is shut down in response to the shutdown command. The robot controller simultaneously sends a start command to the first water pump and the second water pump after the first preset duration. The first water pump and the second water pump receive the start command, and start the first water pump and the second water pump in response to the start command.

In one possible implementation, when the pool cleaning robot has moved to the pool wall of the pool, the robot controller increases the power of the first water pump and starts the second water pump.

In this implementation, when the pool cleaning robot has moved to the pool wall of the pool, the robot controller increases the power of the first water pump and starts the second water pump, to ensure that the pool cleaning robot has a tendency to move in the first direction and to maintain the relative positional relationship between the pool cleaning robot and the pool wall.

For example, when the pool cleaning robot has moved to the pool wall of the pool, the robot controller sends a power increase command to the first water pump and sends a start command to the second water pump. The first water pump receives the power increase command, and the power of the first water pump is increased in response to the power increase command. The second water pump receives the start command, and the second water pump is started in response to the start command.

In one possible implementation, when the pool cleaning robot has moved to the pool wall of the pool, the robot controller directly starts the second water pump.

In this implementation, the robot controller does not control the first water pump but directly starts the second water pump, thus the control method is relatively simple.

For example, when the pool cleaning robot has moved to the pool wall of the pool, the robot controller sends the start command to the second water pump. The second water pump receives the start command, and the second water pump is started in response to the start command.

It should be noted that the robot controller can start the second water pump through any of the above implementations, and no limitations are imposed in the embodiments of the present disclosure.

In Step 405, the robot controller adjusts the power of the first water pump and the second water pump, such that the pool cleaning robot maintains contact with the pool wall.

When both the first water pump and the second water pump are started, the first water pump may drive the pool cleaning robot to move in the first direction, and the second water pump may drive the pool cleaning robot to move in the second direction. To keep the pool cleaning robot in contact with the pool wall, it is required to adjust the power of the first water pump and the second water pump, such that the pool cleaning robot maintains the trend of moving in the first direction.

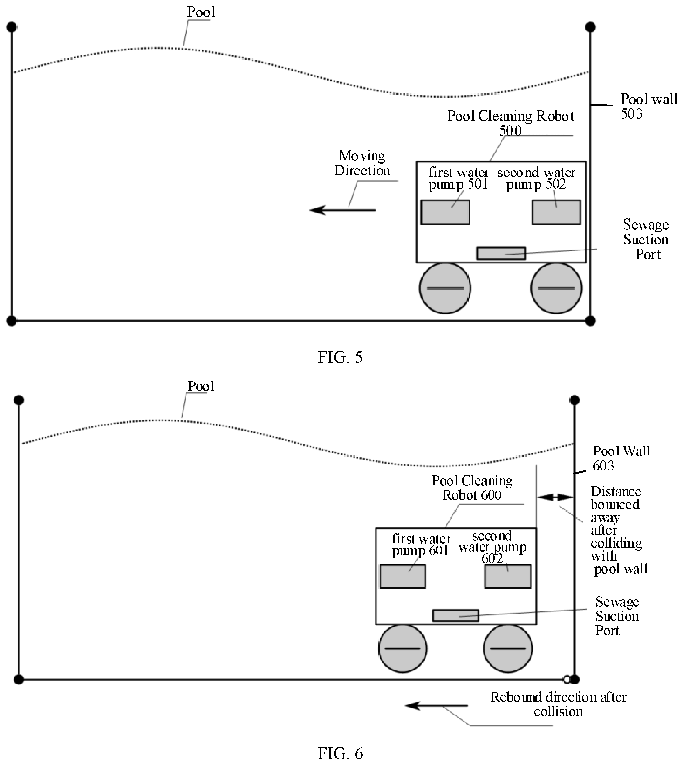

It should be noted that when the two water pumps are operating simultaneously, thrust forces generated are inconsistent due to differences in structures, water channels or impellers. Referring to FIG. 5, when the thrust force generated by the second water pump 502 is greater than that generated by the first water pump 501, the pool cleaning robot 500 may move away from the pool wall 503. Although simultaneously turning on the two water pumps increases the suction force of the sewage suction port, the pool cleaning robot 500 may gradually move away from the pool wall 503 as time goes on, which may weaken the cleaning effects. The first water pump 501 and the second water pump 502 of the pool cleaning robot 500 may be separately controlled, and the output power of the first water pump 501 is controlled to be greater than that of the second water pump 502. In this way, the thrust forces generated by the two water pumps may ensure that the pool cleaning robot 500 moves close to the pool wall 503, thereby ensuring the cleaning effects.

In addition, the pool cleaning robot is driven by the thrust forces generated by the two water pumps to move forward. When the pool cleaning robot gets close to the pool wall, sometimes the pool cleaning robot collides with the pool wall, and after the collision, the pool cleaning robot may be bounced back, referring to FIG. 6. To ensure that the pool cleaning robot 600 gets close to the pool wall 603 to suck the sewage, still using the method as mentioned above, the output power of the first water pump 601 is controlled to be greater than that of the second water pump 602. In this way, the thrust forces generated by the first water pump 601 and the second water pump 602 may ensure that the pool cleaning robot 600 slowly moves close to the pool wall 603, thereby ensuring the cleaning effects.

In one possible implementation, the robot controller increases the power of the first water pump to a first target power and adjusts the power of the second water pump to a second target power, where the first target power is greater than the second target power.

The first target power is greater than the second target power, to ensure that the pool cleaning robot has a tendency to move in the first direction, such that the pool cleaning robot keeps in contact with the pool wall.

For example, the robot controller sends a first power adjustment command to the first water pump and sends a second power adjustment command to the second water pump, where the first power adjustment command carries the first target power, and the second power adjustment command carries the second target power. The first water pump receives the first power adjustment command, obtains the first target power from the first power adjustment command, and adjusts its power to the first target power. The second water pump receives the second power adjustment command, obtains the second target power from the second power adjustment command, and adjusts its power to the second target power.

To provide a clearer explanation of the above implementation, the method for determining the first target power and the second target power will be described below.

In one possible implementation, the robot controller determines a pitch angle of the pool cleaning robot. The robot controller determines the first target power and the second target power based on the pitch angle, where the first target power is positively correlated with the pitch angle, and the second target power is negatively correlated with the pitch angle.

The pitch angle can reflect a slope gradient of the pool bottom where the pool cleaning robot is, and the accuracy of determining the first target power and the second target power based on the pitch angle is relatively high.

For example, the robot controller obtains the pitch angle of the pool cleaning robot by means of a posture sensor. When the pitch angle is greater than or less than a first preset angle, the robot controller determines the first target power and the second target power based on the cleaning level of the pool cleaning robot, the pitch angle, and the mass of the pool cleaning robot. When the pitch angle is equal to the first preset angle, the robot controller determines the first target power and the second target power based on the cleaning level of the pool cleaning robot.

The first preset angle is set by the technical personnel according to the actual situations. For example, the first preset angle is set to 0°. When the pitch angle is 0°, this indicates that the slope gradient of the pool wall where the pool cleaning robot is positioned is 0°, but the embodiments of the present disclosure are not limited thereto. The cleaning level is used for reflecting the cleaning power of the pool cleaning robot. For example, the greater the cleaning level, the higher the cleaning power. The mass of the pool cleaning robot is prestored by the technical personnel in the robot controller.

To provide a clearer explanation of the above examples, the method for determining the first target power and the second target power in the above examples will be described in several parts below.

In the first part, when the pitch angle is greater than or less than the first preset angle, the robot controller determines the first target power and the second target power based on the cleaning level of the pool cleaning robot, the pitch angle, and the mass of the pool cleaning robot.

In one possible implementation, when the pitch angle is greater than the first preset angle, this indicates that the pool cleaning robot is going uphill. The robot controller determines a gravitational component of the pool cleaning robot in the second direction based on the pitch angle and the mass of the pool cleaning robot. The robot controller determines the cleaning power corresponding to the cleaning level. The robot controller determines the first target power and the second target power based on the cleaning power and the gravitational component, such that a first thrust force generated in the first direction by the first water pump operating at the first target power is greater than a sum of the gravitational component and a second thrust force. The second thrust force is a thrust force generated in the second direction by the second water pump operating at the second target power, and the sum of the first target power and the second target power is equal to the cleaning power. When the pitch angle is less than the first preset angle, this indicates that the pool cleaning robot is going downhill. The robot controller determines the gravitational component of the pool cleaning robot in the first direction based on the pitch angle and the mass of the pool cleaning robot. The robot controller determines the first target power and the second target power based on the cleaning power and the gravitational component, such that the sum of the gravitational component and the first thrust force generated in the first direction by the first water pump operating at the first target power is greater than the second thrust force, and the sum of the first target power and the second target power is equal to the cleaning power.

In the second part, when the pitch angle is equal to the first preset angle, the robot controller determines the first target power and the second target power based on the cleaning level of the pool cleaning robot.

In one possible implementation, the robot controller determines the cleaning power corresponding to the cleaning level when the pitch angle is equal to the first preset angle. The robot controller determines the first target power and the second target power based on the cleaning power, such that the first target power is equal to the second target power, and the sum of the first target power and the second target power is equal to the cleaning power.

Alternatively, after Step 405, any of the following Steps 406 to 410 can also be performed.

In Step 406, when the pool cleaning robot moves in the second direction, the robot controller increases the power of the first water pump and/or decreases the power of the second water pump.

When the pool cleaning robot moves in the second direction, this means that the thrust force applied to the pool cleaning robot in the first direction is not sufficient, so the pool cleaning robot gradually moves away from the pool wall. In this case, increasing the power of the first water pump and/or decreasing the power of the second water pump can increase the thrust force applied to the pool cleaning robot in the first direction, such that the pool cleaning robot keeps staying on the pool wall, thereby achieving cleaning of the pool wall.

In Step 407, the robot controller increases the power of the first water pump to a third target power and adjusts the power of the second water pump to a fourth target power at preset time intervals, where a power difference between the third target power and the first target power is greater than or equal to that between the fourth target power and the second target power.

The preset duration is set by the technical personnel according to the actual situations, and no limitations are imposed in the embodiments of the present disclosure. Increasing the power of the first water pump to the third target power and adjusting the power of the second water pump to the fourth target power at preset time intervals are equivalent to increasing the cleaning power of the pool cleaning robot every other preset time duration, thereby improving the cleaning effects of the pool cleaning robot.

In Step 408, after a second preset duration, the robot controller turns off the first water pump and maintains the power of the second water pump unchanged, such that the pool cleaning robot moves in the second direction.

The second preset duration is a duration during which the pool cleaning robot cleans the pool bottom below the pool wall. The second preset duration is set by the technical personnel according to the actual situations, and no limitations are imposed in the embodiments of the present disclosure. After the first water pump is turned off, the second water pump may apply a thrust force to the pool cleaning robot in the second direction, such that the pool cleaning robot is pushed away from the pool wall to continue cleaning other positions of the pool.

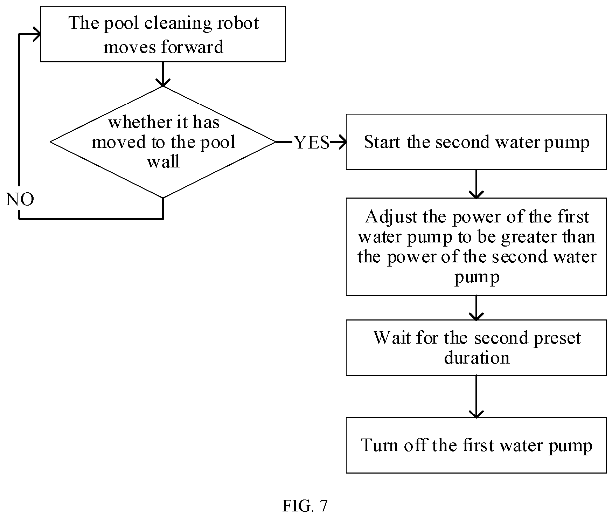

The technical solutions provided in Steps 401 to 405 and Step 408 may be represented by FIG. 7.

Referring to FIG. 7, driven by the first water pump, the pool cleaning robot moves forward in the first direction. When the pool cleaning robot has not yet reached the pool wall, the pool cleaning robot continues moving forward in the first direction. When the pool cleaning robot has reached the pool wall, the second water pump is started, and the power of the first water pump and the power of the second water pump are adjusted, such that the thrust force in the first direction is greater than the thrust force in the second direction. After the second preset duration, the first water pump is turned off, and the power of the second water pump remains unchanged, such that the pool cleaning robot moves in the second direction.

In Step 409, after the second preset duration, the robot controller turns off the first water pump and increases the power of the second water pump, such that the pool cleaning robot moves in the second direction.

Principles of Step 409 and those of Step 408 belong to the same inventive concept, and thus are not to be described in detail here.

In Step 410, the robot controller turns off the first water pump and the second water pump after the second preset duration, and starts the second water pump after a third preset duration, such that the pool cleaning robot moves in the second direction.

The third preset duration is set by the technical personnel according to the actual situations, and no limitations are imposed in the embodiments of the present disclosure. Both the first water pump and the second water pump are turned off after the second preset duration, and the second water pump is restarted after the third duration, which can ensure stability of the posture of the pool cleaning robot.

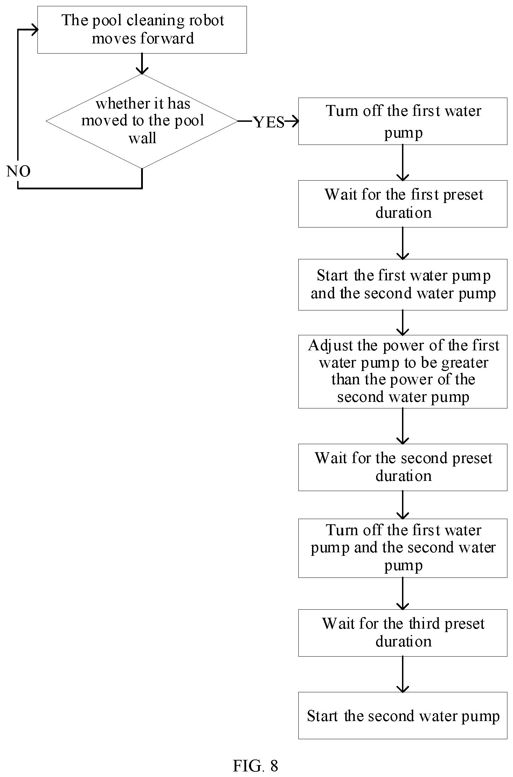

The technical solutions provided in Steps 401 to 405 and Step 410 may be represented by FIG. 8.

Referring to FIG. 8, driven by the first water pump, the pool cleaning robot moves forward in the first direction. When the pool cleaning robot has not yet reached the pool wall, the pool cleaning robot continues moving forward in the first direction. When the pool cleaning robot has reached the pool wall, the first water pump is turned off. After the first preset duration, both the first water pump and the second water pump are started. The power of the first water pump and the power of the second water pump are adjusted, such that the thrust force in the first direction is greater than the thrust force in the second direction. After the second preset duration, both the first water pump and the second water pump are turned off. The second water pump is started after the third preset duration, such that the pool cleaning robot moves in the second direction.

Optional embodiments of the present disclosure may be formed by arbitrary combination of all the foregoing optional technical solutions, and thus are not to be repeated any more herein.

Through the technical solutions provided in the embodiments of the present disclosure, the first water pump of the pool cleaning robot is started to pump the liquid from the sewage suction port of the pool cleaning robot to the first water outlet, which is oriented in the second direction, such that the pool cleaning robot moves in the first direction opposite to the second direction at the bottom of the pool. When the pool cleaning robot has moved to the pool wall of the pool, the second water pump of the pool cleaning robot is started to increase the liquid flow rate of the sewage suction port, that is, to improve the cleaning capacity of the pool cleaning robot. The power of the first water pump and the power of the second water pump are adjusted to keep the pool cleaning robot in contact with the pool wall, thereby achieving effective cleaning of the connection between the pool wall and the pool bottom, and improving the cleaning capacity of the pool cleaning robot.

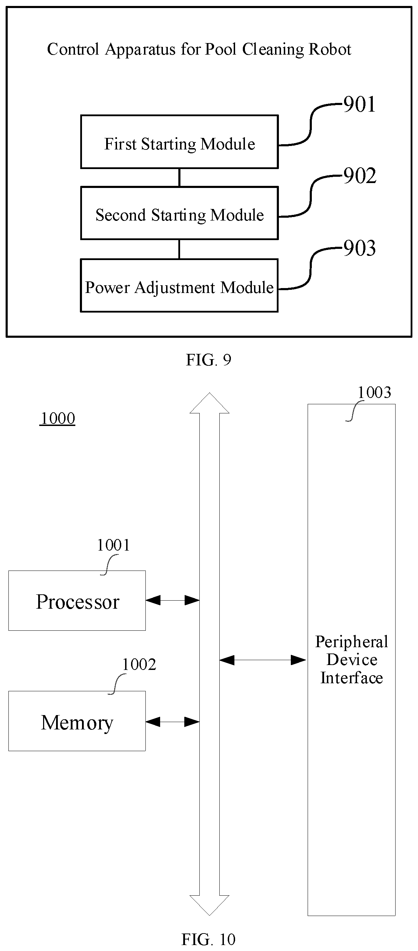

FIG. 9 is a schematic structural diagram of a control apparatus for a pool cleaning robot according to an embodiment of the present disclosure. Referring to FIG. 9, the apparatus includes a first starting module 901, a second starting module 902, and a power adjustment module 903.

The first starting module 901 is configured to start the first water pump of the pool cleaning robot such that the pool cleaning robot moves in the first direction at the bottom of the pool. The first water pump is configured to pump the liquid from the sewage suction port of the pool cleaning robot to the first water outlet of the pool cleaning robot, where the first water outlet is oriented in the second direction, the first direction and the second direction are opposite to each other, and the sewage suction port is positioned at the bottom of the pool cleaning robot.

The second starting module 902 is configured to start the second water pump of the pool cleaning robot when the pool cleaning robot has moved to the pool wall of the pool, to increase the liquid flow rate of the sewage suction port. The second water pump is configured to pump the liquid from the sewage suction port to the second water outlet of the pool cleaning robot, where the second water outlet is oriented in the first direction.

The power adjustment module 903 is configured to adjust the power of the first water pump and the second water pump, such that the pool cleaning robot maintains contact with the pool wall.

In one possible implementation, the second starting module 902 is configured to turn off the first water pump when the pool cleaning robot has moved to the pool wall of the pool. The first water pump and the second water pump are simultaneously started after the first preset duration. Alternatively, the power of the first water pump is increased and the second water pump is started when the pool cleaning robot has moved to the pool wall of the pool.

In one possible implementation, the power adjustment module 903 is configured to increase the power of the first water pump to a first target power and adjust the power of the second water pump to a second target power, where the first target power is greater than the second target power.

In one possible implementation, the apparatus also includes a power determination module configured to determine a pitch angle of the pool cleaning robot. The power determination module is configured to determine the first target power and the second target power based on the pitch angle, where the first target power is positively correlated with the pitch angle, and the second target power is negatively correlated with the pitch angle.

In one possible implementation, the power determination module is configured to determine the first target power and the second target power based on a cleaning level, the pitch angle and mass of the pool cleaning robot when the pitch angle is greater than or less than a first preset angle. When the pitch angle is equal to the first preset angle, the power determination module determines the first target power and the second target power based on the cleaning level of the pool cleaning robot.

In one possible implementation, the power adjustment module 903 is also configured to increase the power of the first water pump to a third target power and adjust the power of the second water pump to a fourth target power at preset time intervals. A power difference between the third target power and the first target power is greater than or equal to a power difference between the fourth target power and the second target power.

In one possible implementation, the apparatus also includes a detection module, which is configured to determine, when the pool cleaning robot includes a collision detection unit, whether the pool cleaning robot has moved to the pool wall of the pool by means of the collision detection unit. When the pool cleaning robot includes an acoustic transceiver unit, the detection module is configured to control the acoustic transceiver unit to emit an acoustic signal in the first direction. Alternatively, the detection module is also configured to determine whether the pool cleaning robot has moved to the pool wall of the pool based on a first echo signal received by the acoustic transceiver unit and the acoustic signal. Alternatively, the detection module is also configured to control, when the pool cleaning robot includes an image acquisition unit, the image acquisition unit to acquire an image in the first direction. The detection module is also configured to determine whether the pool cleaning robot has moved to the pool wall of the pool based on the image. Alternatively, the detection module is also configured to control, when the pool cleaning robot includes a radar, the radar to emit a detection signal in the first direction. The detection module is also configured to determine whether the pool cleaning robot has moved to the pool wall of the pool based on a second echo signal received by the radar and the detection signal.

In one possible implementation, the power adjustment module 903 is also configured to increase the power of the first water pump and/or decrease the power of the second water pump when the pool cleaning robot moves in the second direction.

In one possible implementation, the power adjustment module 903 is also configured to turn off the first water pump and maintain the power of the second water pump unchanged after a second preset duration, such that the pool cleaning robot moves in the second direction. Alternatively, the power adjustment module 903 is also configured to turn off the first water pump and increase the power of the second water pump after the second preset duration, such that the pool cleaning robot moves in the second direction. Alternatively, the power adjustment module 903 is also configured to turn off the first water pump and the second water pump after the second preset duration, and start the second water pump after a third preset duration, such that the pool cleaning robot moves in the second direction.

It should be explained that, when the control apparatus for the pool cleaning robot provided by the above embodiments controls the pool cleaning robot, the above divided respective function modules are described as an example. In actual applications, the above allocated functions may be implemented by different function modules according to actual needs, that is, the inner structure of the pool cleaning robot may be divided into different function modules to implement part or all of the functions described as above. In addition, the control apparatus for the pool cleaning robot and the control method for the pool cleaning robot provided in the above embodiments belong to the same concept. Therefore, reference may be made to the method embodiments for specific implementation processes of the control apparatus, and thus detailed descriptions thereof are omitted here.

Through the technical solutions provided in the embodiments of the present disclosure, the first water pump of the pool cleaning robot is started to pump the liquid from the sewage suction port of the pool cleaning robot to the first water outlet, which is oriented in the second direction, such that the pool cleaning robot moves in the first direction opposite to the second direction at the bottom of the pool. When the pool cleaning robot has moved to the pool wall of the pool, the second water pump of the pool cleaning robot is started to increase the liquid flow rate of the sewage suction port, that is, to improve the cleaning capacity of the pool cleaning robot. The power of the first water pump and the power of the second water pump are adjusted to keep the pool cleaning robot in contact with the pool wall, thereby achieving effective cleaning of the connection between the pool wall and the pool bottom, and improving the cleaning capacity of the pool cleaning robot.

The embodiments of the present disclosure also provide a pool cleaning robot.

FIG. 10 is a schematic structural diagram of the pool cleaning robot according to the embodiments of the present disclosure. Typically, the pool cleaning robot includes a robot controller 1000, which includes one or more processors 1001 and one or more memories 1002.

The processor 1001 may include one or more processing cores, such as a quad-core processor or an octa-core processor. The processor 1001 may be implemented in at least one hardware form from Digital Signal Processing (DSP), Field-Programmable Gate Array (FPGA), and Programmable Logic Array (PLA). The processor 1001 may also include a main processor and a coprocessor. The main processor is a processor used for processing data in an awake state, and is also known as a Central Processing Unit (CPU). The coprocessor is a low power processor used for processing data in a standby state. In some embodiments, the processor 1001 may be integrated with a Graphics Processing Unit (GPU), which is used for rendering and drawing contents required to be displayed on a display screen. In some embodiments, the processor 1001 may also include an AI (Artificial Intelligence) processor for processing computational operations related to machine learning.

The memory 1002 may include one or more computer-readable storage media, which may be non-transitory. The memory 1002 may also include a high-speed random access memory, and a non-volatile memory such as one or more disk storage devices or flash storage devices. In some embodiments, the non-transitory computer-readable storage media in the memory 1002 are used for storing at least one computer program for execution by the processor 1001 to implement the control method for the pool cleaning robot provided in the method embodiments of the present disclosure.

In some embodiments, the pool cleaning robot 1000 may also alternatively include a peripheral device interface 1003 and at least one peripheral device. The processor 1001, the memory 1002, and the peripheral device interface 1003 may be connected through a bus or signal line. Each peripheral device may be connected to the peripheral device interface 1003 through a bus, signal line, or circuit board.

Those skilled in the art may understand that the structure shown in FIG. 10 does not constitute a limitation on the pool cleaning robot 1000, and may include more or fewer components than shown in the figure, or combine some components, or adopt different component arrangements.

In an exemplary embodiment, there is also provided a computer-readable storage medium such as a memory comprising a computer program. The computer program may be executed by the processor to perform the control method for the pool cleaning robot in the above embodiments. For example, the computer-readable storage medium may be a Read-Only Memory (ROM), a Random Access Memory (RAM), a Compact Disc Read-Only Memory (CD-ROM), a magnetic tape, a floppy disk, or an optical data storage device.

In an exemplary embodiment, there is also provided a computer program product or computer program comprising program code stored in a computer-readable storage medium. The processor of the robot controller reads the program code from the computer-readable storage medium, such that the processor executes the program code, causing the robot controller to perform the control method for the pool cleaning robot.

It should be understood for those skilled in the art that all or some steps in the above embodiments may be implemented by hardware, or by programs instructing related hardware. The programs may be stored in a computer-readable storage medium. The storage medium described above may be a read-only memory, a magnetic disc, an optical disc or the like.

The embodiments set forth above are only illustrated as optional embodiments of the present disclosure, and are not intended to limit the present disclosure. All modifications, equivalent substitutions and improvements made within the spirit and principles of the present disclosure shall fall within the protection scope of the present disclosure.

## Claims

1. A control method for a pool cleaning robot, wherein the control method comprises:
starting a first water pump of the pool cleaning robot such that the pool cleaning robot moves in a first direction at a bottom of a pool, the first water pump being configured to pump a liquid from a sewage suction port of the pool cleaning robot to a first water outlet of the pool cleaning robot, the first water outlet being oriented in a second direction, the first direction and the second direction being opposite to each other, and the sewage suction port being positioned at a bottom of the pool cleaning robot;
starting a second water pump of the pool cleaning robot when the pool cleaning robot has moved to a pool wall of the pool, to increase a liquid flow rate of the sewage suction port, the second water pump being configured to pump the liquid from the sewage suction port to a second water outlet of the pool cleaning robot, and the second water outlet being oriented in the first direction;
adjusting power of the first water pump and the second water pump, such that the pool cleaning robot maintains contact with the pool wall.

2. The method according to claim 1, wherein starting the second water pump of the pool cleaning robot when the pool cleaning robot has moved to the pool wall of the pool comprises:
turning off the first water pump when the pool cleaning robot has moved to the pool wall of the pool, and simultaneously starting the first water pump and the second water pump after a first preset duration; or
increasing the power of the first water pump and starting the second water pump when the pool cleaning robot has moved to the pool wall of the pool.

3. The method according to claim 1, wherein adjusting the power of the first water pump and the second water pump comprises:
increasing the power of the first water pump to a first target power and adjusting the power of the second water pump to a second target power, the first target power being greater than the second target power.

4. The method according to claim 3, wherein before increasing the power of the first water pump to the first target power and adjusting the power of the second water pump to the second target power, the method further comprises:
determining a pitch angle of the pool cleaning robot;
determining the first target power and the second target power based on the pitch angle, the first target power being positively correlated with the pitch angle, and the second target power being negatively correlated with the pitch angle.

5. The method according to claim 4, wherein determining the first target power and the second target power based on the pitch angle comprises:
determining the first target power and the second target power based on a cleaning level of the pool cleaning robot, the pitch angle and mass of the pool cleaning robot when the pitch angle is greater than or less than a first preset angle; or
determining the first target power and the second target power based on the cleaning level of the pool cleaning robot when the pitch angle is equal to the first preset angle.

6. The method according to claim 5, wherein determining the first target power and the second target power based on the cleaning level of the pool cleaning robot, the pitch angle and the mass of the pool cleaning robot when the pitch angle is greater than or less than the first preset angle comprises:
when the pitch angle is greater than the first preset angle, determining a gravitational component of the pool cleaning robot in the second direction based on the pitch angle and the mass of the pool cleaning robot; determining cleaning power corresponding to the cleaning level; determining the first target power and the second target power based on the cleaning power and the gravitational component, such that a first thrust force generated in the first direction by the first water pump operating at the first target power is greater than a sum of the gravitational component and a second thrust force, the second thrust force being a thrust force generated in the second direction by the second water pump operating at the second target power, and a sum of the first target power and the second target power being equal to the cleaning power;
when the pitch angle is less than the first preset angle, determining a gravitational component of the pool cleaning robot in the first direction based on the pitch angle and the mass of the pool cleaning robot; determining the first target power and the second target power based on the cleaning power and the gravitational component, such that a sum of the gravitational component and the first thrust force generated in the first direction by the first water pump operating at the first target power is greater than the second thrust force, and the sum of the first target power and the second target power being equal to the cleaning power.

7. The method according to claim 5, wherein determining the first target power and the second target power based on the cleaning level of the pool cleaning robot when the pitch angle is equal to the first preset angle comprises:
determining cleaning power corresponding to the cleaning level when the pitch angle is equal to the first preset angle;
determining the first target power and the second target power based on the cleaning power, such that the first target power is equal to the second target power, and a sum of the first target power and the second target power is equal to the cleaning power.

8. The method according to claim 3, wherein after increasing the power of the first water pump to the first target power and adjusting the power of the second water pump to the second target power, the method further comprises:
increasing the power of the first water pump to a third target power and adjusting the power of the second water pump to a fourth target power at preset time intervals, a power difference between the third target power and the first target power being greater than or equal to a power difference between the fourth target power and the second target power.

9. The method according to claim 1, wherein before starting the second water pump of the pool cleaning robot when the pool cleaning robot has moved to the pool wall of the pool, the method further comprises:
when the pool cleaning robot includes a collision detection unit, determining whether the pool cleaning robot has moved to the pool wall of the pool by means of the collision detection unit; or
when the pool cleaning robot includes an acoustic transceiver unit, controlling the acoustic transceiver unit to emit an acoustic signal in the first direction; and determining whether the pool cleaning robot has moved to the pool wall of the pool based on a first echo signal received by the acoustic transceiver unit and the acoustic signal; or
when the pool cleaning robot includes an image acquisition unit, controlling the image acquisition unit to acquire an image in the first direction; and determining whether the pool cleaning robot has moved to the pool wall of the pool based on the image; or
when the pool cleaning robot includes a radar, controlling the radar to emit a detection signal in the first direction; and determining whether the pool cleaning robot has moved to the pool wall of the pool based on a second echo signal received by the radar and the detection signal.

10. The method according to claim 9, wherein determining whether the pool cleaning robot has moved to the pool wall of the pool by means of the collision detection unit comprises:
determining a collision parameter acquired by the collision detection unit; determining that the pool cleaning robot has moved to the pool wall of the pool when the collision parameter meets a preset collision condition; or determining that the pool cleaning robot has not yet moved to the pool wall of the pool when the collision parameter does not meet the preset collision condition;
determining whether the pool cleaning robot has moved to the pool wall of the pool based on the first echo signal received by the acoustic transceiver unit and the acoustic signal comprises:
determining a distance between the pool cleaning robot and the pool wall based on a time difference between the first echo signal received by the acoustic transceiver unit and the acoustic signal; and determining whether the pool cleaning robot has moved to the pool wall of the pool based on the distance between the pool cleaning robot and the pool wall;
determining whether the pool cleaning robot has moved to the pool wall of the pool based on the image comprises:
recognizing the image to determine the distance between the pool cleaning robot and the pool wall; determining that the pool cleaning robot has not yet moved to the pool wall of the pool when the distance is greater than or equal to a preset distance; or determining that the pool cleaning robot has moved to the pool wall of the pool when the distance is less than the preset distance;
determining whether the pool cleaning robot has moved to the pool wall of the pool based on the second echo signal received by the radar and the detection signal comprises:
determining the distance between the pool cleaning robot and the pool wall based on a time difference between the second echo signal received by the radar and the detection signal; and determining whether the pool cleaning robot has moved to the pool wall of the pool based on the distance between the pool cleaning robot and the pool wall.

11. The method according to claim 1, wherein after adjusting the power of the first water pump and the second water pump, the method further comprises:
increasing the power of the first water pump and/or decreasing the power of the second water pump when the pool cleaning robot moves in the second direction.

12. The method according to claim 1, wherein after adjusting the power of the first water pump and the second water pump, the method further comprises:
turning off the first water pump and maintaining the power of the second water pump unchanged after a second preset duration, such that the pool cleaning robot moves in the second direction; or
turning off the first water pump and increasing the power of the second water pump after the second preset duration, such that the pool cleaning robot moves in the second direction; or
turning off the first water pump and the second water pump after the second preset duration, and starting the second water pump after a third preset duration, such that the pool cleaning robot moves in the second direction.

13. A control apparatus for a pool cleaning robot, wherein the control apparatus comprises:
a first starting module configured to start a first water pump of the pool cleaning robot such that the pool cleaning robot moves in a first direction at a bottom of a pool, the first water pump being configured to pump a liquid from a sewage suction port of the pool cleaning robot to a first water outlet of the pool cleaning robot, the first water outlet being oriented in a second direction, the first direction and the second direction being opposite to each other, and the sewage suction port being positioned at a bottom of the pool cleaning robot;
a second starting module configured to start a second water pump of the pool cleaning robot when the pool cleaning robot has moved to a pool wall of the pool, to increase a liquid flow rate of the sewage suction port, the second water pump being configured to pump the liquid from the sewage suction port to a second water outlet of the pool cleaning robot, and the second water outlet being oriented in the first direction;
a power adjustment module configured to adjust power of the first water pump and the second water pump such that the pool cleaning robot maintains contact with the pool wall.

14. A pool cleaning robot comprising one or more processors and one or more memories, wherein the one or more memories store at least one computer program loaded and executed by the one or more processors to implement the control method for a pool cleaning robot as claimed in any one of claims 1 to 12.

15. A computer-readable storage medium storing at least one computer program loaded and executed by a processor to implement the control method for a pool cleaning robot according to any one of claims 1 to 12.
